# NEUE EUROPÄISCHE PATENTSCHRIFT

(11) **EP 0 728 783 B2**
(45) Veröffentlichungstag und Bekanntmachung des Hinweises auf die Entscheidung über den Einspruch: **14.11.2001**
(45) Hinweis auf die Patenterteilung: 22.07.1998
(21) Anmeldenummer: 96100875.2
(22) Anmeldetag: 23.01.1996
(51) Int. Cl.: C08G 18/66, C08G 18/65, C08G 18/48, C08J 9/14

(54) **Verfahren zur Herstellung von Polyurethan-Hartschaumstoffen**
Process for manufacturing polyurethane rigid foams
Procédé de préparation de mousse de polyuréthane rigide

(30) Priorität: 31.01.1995 DE 19502969
(43) Veröffentlichungstag der Anmeldung: 28.08.1996
(73) Patentinhaber: Elastogran GmbH, 49440 Lemförde (DE)
(72) Erfinder: Scherbel, Karin, D-01987 Schwarzheide (DE); Ebert, Katrin, D-01987 Schwarzheide (DE); Appenroth, Hartmut, D-01945 Arnsdorf (DE); von Malotki, Peter, Dr., D-01936 Cosel (DE)
(74) Vertreter: Karg, Jochen

(56) Entgegenhaltungen:
- EP-A- 0 478 216
- EP-A- 0 554 750
- EP-A- 0 610 714
- WO-A-96/12759
- US-A- 4 954 537
- US-A- 5 285 759
- US-A- 5 290 823

## Beschreibung

Gegenstand der Erfindung ist ein Verfahren zur Herstellung von Polyurethan-Hartschaumstoffen, die insbesondere für die Isolation von Kühl- und Gefriergeräten eingesetzt werden können.

Die Ausschäumung von Hohlräumen in Kühl- und Gefriergeräten mittels Polyurethan-Hartschaumstoffen ist bekannt.

Diese Hohlräume werden durch Beschichten aus unterschiedlichen Materialien begrenzt, z.B. Stahlblech, schlagzähes Polystyrol, Acrylnitril-Butadien-Styrolcopolymerisate, Polypropylen oder papieriackierte Aluminiumfolie.

Die Aufgabe der Polyurethan-Hartschaumstoffe besteht darin, die Hohlräume gleichmäßig und lunkerfrei auszufüllen, durch eine möglichst gute Verbindung mit den Deckschichten eine stabile Konstruktion zu erzeugen und für eine gute thermische Isolation zu sorgen.

Geeignete Polyurethan-Hartschaumstoffe können in bekannter Weise durch Umsetzung von organischen Polyisocyanaten mit einer oder mehreren Verbindungen mit mindestens zwei reaktiven Wasserstoffatomen, vorzugsweise Polyester- und/oder Polyetheralkoholen in Gegenwart von Treibmitteln, Katalysatoren und gegebenenfalls Hilfsmitteln und/oder Zusatzstoffen hergestellt werden.

Eine zusammenfassende Übersicht über die Herstellung von Polyurethan-Hartschaumstoffen und ihre Verwendung in Kühl- und Gefriergeräten findet sich z.B. in Kunststoff-Handbuch, Band 7, Polyurethane, 3. Auflage 1993, herausgegeben von Dr. Günter Oertel, Carl-Hauser-Verlag, München/Wien.

Als Treibmittel für Polyurethan-Hartschaumstoffe wurden in der Vergangenheit bevorzugt fluor- und chlorhaltige Kohlenwasserstoffe (FCKW), insbesondere Monofluortrichlormethan, eingesetzt. Sie erfüllten zwar die an sie gestellte technischen Anforderungen sehr gut, aufgrund ihres hohen Ozonschädigungs- und Treibhauspotentiales wurde jedoch intensiv an ihrer Ablösung gearbeitet und nach alternativen Treibmitteln gesucht.

Dabei wurden Wasserstoff, Fluor und Chlor enthaltende Kohlenwasserstoffe (HFCKW), perfluorierte und teilfluorierte Kohlenwasserstoffe (FKW und UFKW) sowie Kohlenwasserstoffe auf ihre Eignung untersucht.

Dabei haben sich neben den HFCKW und HKW bei Polyurethan-Hartschaumsystemen für Kühl- und Gefriergeräte insbesondere Kohlenwasserstoffe aufgrund ihres praktisch nicht vorhandenen Ozonschädigungspotentials und ihres vernachlässigbar kleinen Treibhauspotentials als Treibmittel durchgesetzt.

In EP-A 421 269 wird als Treibmittel für Hartschaumstoffe insbesondere Cyclopentan vorgeschlagen, das in ausreichender Reinheit zur Verfügung steht und bei entsprechender Rezeptierung zu homogenen, klaren Polyolkomponenten führt, die mit Isocyanaten zu Polyurethan-Hartschaumstoffen mit zufriedenstellenden Eigenschaften, insbesondere niedriger Wärmeleitfähigkeit, schneller Aushärtung und guter Dimensionsstabilität umgesetzt werden können.

Nachteilig ist der relativ hohe Preis von Cyclopentan. Es wäre vorteilhaft, die wesentlich preisgünstigeren niedrigsiedenden aliphatischen Pentane als Treibmittel für Polyurethan-Hartschaumstoffe einzusetzen, die hinsichtlich der Umweltverträglichkeit die gleichen vorteilhaften Eigenschaften aufweisen wie Cyclopentan.

Die Verwendung aliphatischer Pentane als Treibmittel führte jedoch bisher neben einer Verschlechterung der Wärmeleitfähigkeit der Polyurethan-Hartschaumstoffe insbesondere zu Homogenitätsproblemen in der Polyolkomponente. Bei Einsatz von aliphatischem Pentan in der für Treibmittel üblichen Mengen traten Phasentrennungen auf, so daß eine Verarbeitung der Polyolkomponente auf üblichen Maschinen nicht mehr möglich war.

Zur Behebung dieses Mangels ist es zwar möglich, durch Zusatz von höhermolekularen Polyetheralkoholen die Homogenität der Polyolkomponente soweit zu verbessern, daß eine Verarbeitung auf den üblichen Maschinen möglich ist, es kommt jedoch zu einer Verschlechterung der Aushärtung der Polyurethan-Hartschaumstoffe.

Die Aufgabe der vorliegenden Erfindung bestand darin, Systeme zur Herstellung von Polyurethan-Hartschaumstoffen, insbesondere für die Isolierung von Kühl- und Gefriergeräten bereitzustellen, in denen niedrigsiedende aliphatische Kohlenwasserstoffe als Treibmittel eingesetzt werden können, ohne daß es zu Inhomogenitäten der Polyolkomponente und damit zu Verarbeitungsschwierigkeiten kommt.

Die Aufgabe konnte überraschenderweise gelöst werden durch ein Verfahren zur Herstellung von Polyurethan-Hartschaumstoffen, in dem als Polyolkomponente ein Gemisch aus
einem oder mehreren hochfunktionellen Polyetheralkoholen mit Funktionalitäten von 6 bis 8 und mittleren Äquivalentmassen von 80 bis 110,
einem oder mehreren Polyetheralkoholen auf Basis aliphatischer Amine mit Funktionalitäten von 3 bis 4 und mittleren Äquivalentmassen von 70 bis 130,
einem oder mehreren niedrigfunktionellen Polyetheralkoholen mit Funktionalitäten von 2 bis 3 und mittleren Äquivalentmassen von 67 bis 250, und
einem OH-Gruppen enthaltenden Fettsäureester in den unten genannten Mengenverhältnissen
eingesetzt wird.

Gegenstand der Erfindung ist demzufolge ein Verfahren zur Herstellung von Polyurethan-Hartschaumstoffen durch Umsetzung von
a) organischen Polyisocyanaten
b) höhermolekularen Verbindungen mit mindestens zwei reaktiven Wasserstoffatomen und gegebenenfalls
c) niedermolekularen Kettenverlängerungs- und/oder Vernetzungsmitteln in Gegenwart von
d) Treibmitteln
e) Katalysatoren sowie gegebenenfalls
f) Hilfsmitteln und Zusatzstoffen,
dadurch gekennzeichnet, daß die Polyolkomponente (b) aus einem Gemisch aus
b1) 20 bis 60 Gew.-Teilen eines oder mehrerer hochfunktioneller Polyetheralkohole mit Funktionalitäten von 6 bis 8 und mittleren Äquivalentmassen von 125 bis 200,
b2) 5 bis 30 Gew.-Teilen eines oder mehrerer Polyetheralkohole auf Basis aliphatischer Amine mit Funktionalitäten von 3 bis 4 und mittleren Äquivalentmassen von 70 bis 130,
b3) 3 bis 25 Gew.-Teilen eines oder mehrerer niedrigfunktioneller Polyetheralkohole mit Funktionalitäten von 2 bis 3 und mittleren Äquivalentmassen von 67 bis 250, und
b4 8 bis 20 Gew.-Teilen eines OH-Gruppen enthaltenden Fettsäureesters besteht.

Als Ester aus Glyzerin und OH-Gruppen enthaltenden Fettsäuren wird insbesondere Rizinusöl eingesetzt.

Die Äquivalentmasse wird ermittelt durch Division der mittels Gelchromatografie oder analoger Verfahren ermittelten mittleren Molmasse des Polyols durch die mittlere Funktionalität des Polyols.

Die erfindungsgemäß verwendete Polyolkomponente hat vorzugsweise eine mittlere Hydroxylzahl von 350 bis 390 mg KOH/g.

Das erfindungsgemäße Verfahren wird vorzugsweise bei einem Isocyanat-lndex von 115 bis 130 durchgeführt.

Als Treibmittel können vorteilhafterweise niedrigsiedende aliphatische Kohlenwasserstoffe eingesetzt werden. Insbesondere verwendet werden die aliphatischen Pentan-Isomeren einzeln oder im Gemisch untereinander, vorzugsweise reines n-Pentan.

Zu den einzelnen Komponenten, die im erfindungsgemäßen Verfahren eingesetzt werden, ist folgendes zu sagen:
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylendiisocyanat-1,6; cycloaliphatische Diisocyanate, wie Cyclohexan-1,3- und -1,4-diisocyanat sowie beliebige Gemische dieser Isomeren, 1-lsocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDl und Toluylendiisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDl. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.
   Besonders bewährt haben sich als organische Polyisocyanate und kommen daher vorzugsweise zur Anwendung: Mischungen aus Toluyien-diisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylen-diisocyanaten, 4,4'-Diphenylmethandiisocyanat, Diphenylmethan-diisocyanat-lsomerengemischen oder Roh-MDl und insbesondere Roh-MDI mit einem Diphenylmethan-diisocyanat-Isomerengehalt von 30 bis 80 Gew.-%, vorzugsweise von 30 bis 55 Gew.-%.
b) Die verwendeten Polyether-polyole werden nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kahumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle für die erfindungsgemäß verwendeten Polyetheralkohole kommen folgende Verbindungen in Betracht:
b1) Es werden insbesondere hydroxylgruppenhaltige hochfunktionelle Verbindungen, insbesondere Zucker, Stärke oder Lignin als Startsubstanzen verwendet. Von besonderer praktischer Bedeutung sind hierbei Glucose, Sucrose und Sorbitol. Da diese Verbindungen bei den üblichen Reaktionsbedingungen der Alkoxylierung in fester Form vorliegen, ist es allgemein üblich, diese Verbindungen gemeinsam mit Koinitiatoren zu alkoxylieren. Als Koinitiatoren eignen sich besonders Wasser und mehrfunktionelle niedere Alkohole, z.B. Glyzerin, Ethylenglykol, Propylenglykol und deren niedere Homologe.
b2) Es werden insbesondere Ammoniak, mehrfunktionelle aliphatische Amine, insbesondere solche mit 2 bis 6 Kohlenstoffatomen und primären und sekundären Aminogruppen sowie Aminoalkohole mit 2 bis 6 Kohlenstoffatomen in der Hauptkette eingesetzt.
   Vorzugsweise eingesetzt werden Ethylendiamin, Monoalkylethylendiamine, 1,3-Propylendiamin sowie verschiedene Butylen- und Hexamethylendiamine; und als Aminoalkohole Ethanolamin, Diethanolamin und Triethanolamin.
b3) Als Startsubstanzen werden Wasser und/oder niedermolekulare zwei- und/oder dreifunktionelle Alkohole eingesetzt. Verwendet werden insbesondere lineare oder verzweigte Alkohole, vorzugsweise solche mit 2 bis 6 Kohlenstoffatomen in der Hauptkette.
   Bevorzugt als Startsubstanzen eingesetzte Verbindungen sind neben Wasser Ethylenglykol, Propylenglykol, Diethylenglykol, Dipropylenglykol, Butandiol-1,4, Hexandiol-1,5, Glyzerin und Trimethylpropan.
   Als Alkylenoxide werden zur Herstellung der Polyetherole b1, b2 und b3 niedere Alkylenoxide, insbesondere solche mit bis zu 4 Kohlenstoffatomen, verwendet. Von besonderer technischer Bedeutung sind das Ethylenoxid und das 1,2-Propylenoxid.
   Die Herstellung der erfindungsgemäß verwendeten Polyetheralkohole erfolgt zumeist nach dem anionischen Reaktionsmechanismus. Dazu wird die Startsubstanz zunächst mit einem basischen Katalysator versetzt. Als basische Katalysatoren werden zumeist Alkali- oder Erdalkalimetallhydroxide und -carbonate, insbesondere Kaliumhydroxid, verwendet.
   Die Anlagerung der Alkylenoxide erfolgt üblicherweise bei Temperaturen von 80 bis 130°C und Drücken von 0,1 bis 1,0 MPa. Nach der Anlagerung der Alkylenoxide erfolgt die Neutralisation des basischen Katalysators und die Aufarbeitung des Polyetheralkohols durch Entfernung der Feststoffe, zumeist durch Filtration, und Entfernung der leichtflüchtigen Bestandteile, zumeist durch Vakuumdestillation, um die thermische Beanspruchung des Polyetheralkohols gering zu halten.
c) Die Polyurethan-Hartschaumstoffe können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cydoaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Polyurethan-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Polyolverbindung (b) zum Einsatz.
d) Als Treibmittel für das erfindungsgemäße Verfahren können die zur Herstellung von Polyurethan-Hartschaumstoffen üblichen Treibmittel eingesetzt werden.
   Vorteilhafterweise werden als Treibmittel niedrigsiedende aliphatische Kohlenwasserstoffe, vorzugsweise n-Pentan und/oder iso-Pentan, insbesondere n-Pentan verwendet.
   Das n-Pentan hat einen Siedepunkt von 36°C, iso-Pentan einen Siedepunkt von 28°C. Damit liegen die Siedepunkte in einem für den Treibvorgang günstigen Bereich.
   Da die als Treibmittel geeigneten aliphatischen Kohlenwasserstoffe brennbar und explosibel sind, müssen die Verschäumungsanlagen mit den entsprechenden Sicherheitseinrichtungen ausgestattet sein, wie sie auch beim Einsatz von Cyclopentan als Treibmittel notwendig sind.
   Es ist vorteilhaft, die aliphatischen Kohlenwasserstoffe gemeinsam mit Wasser als Treibmittel einzusetzen. Die eingesetzte Menge an aliphatischen Kohlenwasserstoffen beträgt 2 bis 25 Gew.-%, vorzugsweise 10 bis 13 Gew.-%, bezogen auf die Komponente b). Der Anteil des Wassers richtet sich nach der angestrebten Rohdichte des Polyurethan-Hartschaumstoffes.
e) Als Katalysatoren (e) zur Herstellung der Polyurethan-Hartschaumstoffe werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsauren, z.B. Dibutylzinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cydohexylmorpholin, N,N,N',N'-Tetramethylethylendiamin, N,N,N',N'-Tetramethyl-butandiamin, N,N,N',N'-Tetramethylhexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bicyclo-(2,2,2)-octan, und Alkanolaminverbindungen, wie Triethanolamin, Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente (b).
f) Der Reaktionsmischung zur Herstellung der Polyurethan-Hartschaumstoffe können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl-bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 erreichen kann.
   Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyf)-ethylendiphosphat, Dimethylmethanphosphonat, Diethanolaminomethylphosphonsäurediethylester sowie handelsübliche halogenhaltige Flammschutzpolyole.
   Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponente (b) zu verwenden.
   Üblicherweise erfolgt jedoch bei den erfindungsgemäßen Polyurethan-Hartschaumstoffen kein Zusatz von Flammschutzmitteln.
   Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 3. Auflage, 1993 zu entnehmen.

Zur Herstellung der Polyurethan-Hartschaumstoffe werden die organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisöcyanate (a) zur Summe der reaktiven Wasserstoffatome der Komponenten (b) und gegebenenfalls (c) 0,85 bis 1,25:1, vorzugsweise 0,95 bis 1,15:1 und insbesondere 1 bis 1,05:1, beträgt. Falls die Polyurethan-Hartschaumstoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 1,5 bis 8:1 angewandt.

Vorteilhafterweise wird bei den erfindungsgemäßen Polyurethan-Hartschaumstoffen die Umsetzung bei einem Isocyanat-lndex von 115 bis 130 durchgeführt.

Die Polyurethan-Hartschaumstoffe werden vorteilhafterweise nach dem one shot-Verfahren, beispielsweise mit Hilfe der Hochdruck- oder Niederdruck-Technik in offenen Formen. Als besonders vorteilhaft hat es sich erwiesen, nach dem Zweikomponenten-Verfahren zu arbeiten und die Aufbaukomponenten (b), (d), (e) und gegebenenfalls (c) und (f) in der Komponente (A) zu vereinigen und als Komponente (B) die organischen Polyisocyanate, modifizierten Polyisocyanate (a).

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in die offene Form eingebracht. Die Vermischung kann, wie bereits dargelegt wurde,mechanisch mittels eines Rührers oder einer Rührschnecke durchgeführt werden.

Die nach dem erfindungsgemäßen Verfahren hergestellten Polyurethan-Hartschaumstoffe weisen eine Dichte von 0,02 bis 0,75 g/cm³, vorzugsweise von 0,025 bis 0,24 g/cm³ und insbesondere von 0,03 bis 0,1 g/cm³ auf. Besonders eignen sie sich als Isolationsmaterial im Bau- und Kühlmöbelsektor, z.B. als Zwischenschicht für Sandwichelemente oder zum Ausschäumen von Kühlschrank- und Kühltruhengehäusen.

Die Erfindung soll an nachfolgenden Beispielen näher erläutert werden.

| Beispiel 1 | |
|---|---|
| 42,9 Gew.-Teile | Polyetheralkohol auf Basis Sucrose und Propylenoxid, mittlere Äquivalentmasse 140 |
| | |
| 9,0 Gew.-Teile | Polyetheralkohol auf Basis Sorbit und Propylenoxid, mittlere Äquivalentmasse 165 |
| | |
| 10,6 Gew.-Teile | Polyetheralkohol auf Basis Glycerol und Propylenoxid mit einer mittleren Äquivalentmasse von 135 |
| | |
| 6,4 Gew.-Teile | Polyetheralkohol auf Basis Wasser und Propylenoxid mit einer mittleren Äquivalentmasse von 90 |
| | |
| 5,0 Gew.-Teile | Polyetheralkohol auf Basis Ethylendiamin und Propylenoxid mit einer mittleren Äquivalentmasse von 117 |
| | |
| 5,0 Gew.-Teile | Polyetheralkohol auf Basis Ethylendiamin und Propylenoxid mit einer mittleren Äquivalentmasse von 73 |
| | |
| 14,5 Gew. -Teile | Rizinusöl |
| | |
| 1,5 Gew.-Teile | Schaumstabilisator |
| | |
| 2,5 Gew.-Teile | Dimethylcyclohexylamin |
| | |
| 0,5 Gew.-Teile | Kaliumacetat in Ethylenglycol 50 %ige Lösung |
| | |
| 2,1 Gew.-Teile | Wasser |

wurden vermischt. Das Polyolgemisch ohne Stabilisator, Katalysator und Wasser hatte eine mittlere Hydroxylzahl von 374 mg KOH/g.

100 Gew.-Teile der kompletten Polyolmischung wurden mit 11 Gew.-Teilen n-Pentan vermischt und mit 132 Gew.-Teile (entspricht einem Isocyanatindex von 123) eines Gemisches aus Diphenylmethan-diisocyanat und Polymethyl-polyphenylen-polyisocyanaten mit einem NCO-Gehalt von 31 Gew.-% mittels einer Hochdruckmaschine vermischt und in eine Lanzenform eingetragen.

Das Gemisch aus den Polyolen und dem Treibmittel war klar und homogen.

Das System zeigte eine gute Aushärtung, d.h. bei einer Gesamtrohdichte von 38,0 kg/m³ und einer Entformzeit von 5 Minuten war der Nachtrieb in der Mitte der Lanze nach 24 Stunden gleich Null.

| Beispiel 2 | |
|---|---|
| Aus | |
| | |
| 43,3 Gew.-Teile | Polyetheralkohol auf Basis Sucrose und Propylenoxid, mittlere Äquivalentmasse 140 |
| | |
| 10,4 Gew.-Teile | Polyetheralkohol auf Basis Sorbit und Propylenoxid, mittlere Äquivalentmasse 165 |
| | |
| 10,7 Gew.-Teile | Polyetheralkohol auf Basis Glycerol und Propylenoxid mit einer mittleren Äquivalentmasse von 135 |
| | |
| 6,1 Gew.-Teile | Polyetheralkohol auf Basis Wasser und Propylenoxid mit einer mittleren Äquivalentmasse von 95 |
| | |
| 8,0 Gew.-Teile | Polyetheralkohol auf Basis Ethylendiamin und Propylenoxid mit einer mittleren Äquivalentmasse von 73 |
| | |
| 15,0 Gew.-Teile | Rizinusöl |
| | |
| 1,5 Gew.-Teile | Schaumstabilisator |
| | |
| 2,4 Gew.-Teile | Dimethylcyclohexylamin |
| | |
| 0,5 Gew.-Teile | Kaliumacetat in Ethylenglycol 50 %ige Lösung |
| | |
| 2,1 Gew.-Teile | Wasser |

wurde eine Polyolmischung hergestellt.

Das Polyolgemisch besaß eine mittlere OH-Zahl von 384 mg KOH/g.

100 Gew.-Teile des Polyolgemisches werden mit 11 Teilen n-Pentan zu einer homogenen und klaren Mischung vermischt und mit 133 Gew.-Teilen des in Beispiel 1 verwendeten Polyisocyanates, wie in Beispiel 1 beschrieben, verschäumt.

Das System zeigte eine gute Aushärtung, bei einer Gesamtrohdichte von 37,0 kg/cm³ und einer Entformzeit von 5 Minuten war der Nachtrieb in der Mitte der Lanze gleich Null.

| Beispiel 3 (Vergleich) | |
|---|---|
| Aus | |
| | |
| 46,7 Gew.-Teile | eines Polyetheralkohols auf Basis Saccharose und Propylenoxid mit einer mittleren Äquivalentmasse 118 |
| | |
| 24,2 Gew.-Teile | eines Polyetheralkohols auf Basis von Glycerol und Propylenoxid mit einer mittleren Äquivalentmasse von 125 |
| | |
| 7,0 Gew.-Teile | eines Polyetheralkohols auf Basis von Ethylendiamin und Propylenoxid mit einer mittleren Äquivalentmasse von 117 |
| | |
| 1,0 Gew.-Teile | eines Polyetheralkohols auf Basis Wasser und Propylenoxid mit einer mittleren Äquivalentmasse von 90 |
| | |
| 14,5 Gew.-Teile | Rizinusöl |
| | |
| 1,5 Gew.-Teile | Schaumstabilisator |
| | |
| 2,5 Gew.-Teile | Dimethylcyclohexylamin |
| | |
| 0,5 Gew.-Teile | Kaliumacetat in Ethylenglycol, 50 %ige Lösung |
| | |
| 2,1 Gew.-Teile | Wasser |

wurde eine Polyolmischung hergestellt.

Die mittlere OH-Zahl des Polyolgemisches betrug 401 mg KOH/g.

100 Gew.-Teile dieser Polyolkomponente mit 11 Gew.-Teilen n-Pentan vermischt, ergaben eine stark trübe Mischung, die sich bereits nach ca. 20 Minuten entmischte. Die Verarbeitung auf üblichen Hochdruckmaschinen war nicht möglich.

| Beispiel 4 (Vergleich) | |
|---|---|
| Aus | |
| | |
| 69,2 Gew.-Teile | eines Polyetheralkohols Basis Sorbit und Propylenoxid mit einer mittleren Äquivalentmasse 165 |
| | |
| 4,0 Gew.-Teile | eines Polyetheralkohols auf Basis H₂O und Propylenoxid mit einer mittleren Äquivalentmasse von 125 |
| | |
| 15,0 Gew.-Teile | eines Polyetheralkohols Basis H₂O und Propylenoxid mit einer mittleren Äquivalentmasse von 530 |
| | |
| 5,0 Gew.-Teile | Rizinusöl |
| | |
| 1,5 Gew.-Teile | eines Schaumstabilisators |
| | |
| 2,8 Gew.-Teile | Dimethylcyclohexylamin |
| | |
| 0,5 Gew.-Teile | Kaliumacetat in Ethylenglycol, 50 %ige Lösung |
| | |
| 2,0 Gew.-Teile | Wasser |

wurde eine Polyolmischung hergestellt.

Das Polyolgemisch hatte eine mittlere OH-Zahl von 297 mg KOH/g.

100 Gew.-Teile dieser Polyolkomponente wurde mit 11 Gew.-Teilen n-Pentan vermischt. Es entstand eine klare, homogene Mischung. Die Mischung aus Polyolkomponente und Treibmittel wurde mit 110 Gew.-Teilen des Polyisocyanates gemäß Beispiel 1, wie in Beispiel 1 beschrieben, verschäumt (Isocyanatindex von 113).

Das System zeigte ein sehr ungünstiges Aushärteverhalten. Formkörper ohne Nachtrieb wurden erst bei Entformzeiten von 8 Minuten erreicht. Das bedeutet eine Verlängerung der Verweilzeiten der geschäumten Teile im Werkzeug von bis zu 60 %. Eine derartige Verlängerung ist unter Produktionsbedingungen nicht akzeptabel.

## Patentansprüche

1. Verfahren zur Herstellung von Polyurethan-Hartschaumstoffen durch Umsetzung von
a) organischen Polyisocyanaten
b) höhermolekularen Verbindungen mit mindestens zwei reaktiven Wasserstoffatomen und gegebenenfalls
c) niedermolekularen Kettenverlängerungs- und/oder Vernetzungsmitteln
in Gegenwart von
d) Treibmitteln
e) Katalysatoren sowie gegebenenfalls
f) Hilfsmitteln und Zusatzstoffen,
**dadurch gekennzeichnet, daß** als höhermolekulare Verbindungen mit mindestens zwei reaktiven Wasserstoffatomen ein Gemisch aus
b1) 20 bis 60 Gew.-Teilen eines oder mehrerer hochfunktioneller Polyetheralkohole mit Funktionalitäten von 6 bis 8 und mittleren Äquivalentmassen von 125 bis 200,
b2) 5 bis 30 Gew.-Teilen eines oder mehrerer Polyetheralkohole auf Basis aliphatischer Amine mit Funktionalitäten von 3 bis 4 und mittleren Äquivalentmassen von 70 bis 130,
b3) 3 bis 25 Gew.-Teilen eines oder mehrerer niedrigfunktioneller Polyetheralkohole mit Funktionalitäten von 2 bis 3 und mittleren Äquivalentmassen von 67 bis 250, und
b4) 8 bis 20 Gew.-Teilen eines Esters aus Glyzerin und OH-Gruppen enthaltenden Fettsäuren
besteht.

2. Verfahren nach Anspruch 1, **dadurch gekennzeichnet, daß** als höhermolekulare Verbindungen mit mindestens zwei reaktiven Wasserstoffatomen ein Gemisch mit einer mittleren Hydroxylzahl von 350 bis 390 mg KOH/g eingesetzt wird.

3. Verfahren nach Anspruch 1 oder 2, **dadurch gekennzeichnet, daß** als Ester aus Glyzerin und OH-Gruppen enthaltenden Fettsäuren Rizinusöl eingesetzt wird.

4. Verfahren nach einem der Ansprüche 1 bis 3, **dadurch gekennzeichnet, daß** die Umsetzung bei einem Isocyanat-Index von 115 bis 130 durchgeführt wird.

5. Verfahren nach einem der Ansprüche 1 bis 4, **dadurch gekennzeichnet, daß** als Treibmittel aliphatische Kohlenwasserstoffe eingesetzt werden.

6. Verfahren nach Anspruch 5, **dadurch gekennzeichnet, daß** als Treibmittel n-Pentan und/oder iso-Pentan eingesetzt wird.

7. Verfahren nach Anspruch 5 oder 6, **dadurch gekennzeichnet, daß** als Treibmittel n-Pentan eingesetzt wird.

## Claims

1. A process for producing polyurethane rigid foams by reacting
a) organic polyisocyanates
b) relatively high molecular weight compounds containing at least two reactive hydrogen atoms and, if desired,
c) low molecular weight chain extenders and/or crosslinkers
in the presence of
d) blowing agents
e) catalysts and, if desired,
f) auxiliaries and additives,
wherein the relatively high molecular weight compounds containing at least two reactive hydrogen atoms comprise a mixture of
b1) from 20 to 60 parts by weight of one or more high-functional, polyether alcohols having functionalities of from 6 to 8 and mean equivalent masses of from 125 to 200,
b2) from 5 to 30 parts by weight of one or more polyether alcohols based on aliphatic amines having functionalities of from 3 to 4 and mean equivalent masses of from 70 to 130,
b3) from 3 to 25 parts by weight of one or more low-functional polyether alcohols having functionalities of from 2 to 3 and mean equivalent masses of from 67 to 250, and
b4) from 8 to 20 parts by weight of an ester of glycerol and OH-containing fatty acids.

2. A process as claimed in claim 1, wherein the relatively high molecular weight compounds containing at least two reactive hydrogen atoms which are used comprise a mixture having a mean hydroxyl number of from 350 to 390 mg KOH/g.

3. A process as claimed in claim 1 or 2, wherein the ester of glycerol and OH-containing fatty acids which is used is castor oil.

4. A process as claimed in any one of claims 1 to 3, wherein the reaction is carried out at an isocyanate index of from 115 to 130.

5. A process as claimed in any one of claims 1 to 4, wherein aliphatic hydrocarbons are used as blowing agents.

6. A process as claimed in claim 5, wherein the blowing agent used is n-pentane and/or iso-pentane.

7. A process as claimed in claim 5 or 6, wherein the blowing agent used is n-pentane.

## Revendications

1. Procédé pour la préparation de mousses dures de polyuréthanne par mise en réaction
a) de polyisocyanates organiques,
b) de composés à poids moléculaires élevés contenant au moins deux atomes d'hydrogène réactifs, et le cas échéant
c) d'agents d'allongement de chaînes et/ou de réticulation à bas poids moléculaires,
en présence
d) d'agents moussants,
e) de catalyseurs et, le cas échéant,
f) d'adjuvants et d'additifs,
**caractérisé en ce qu'**on met en oeuvre, à titre de composés à poids moléculaires élevés contenant au moins deux atomes d'hydrogène réactifs, un mélange constitué
b1) de 20 à 60 parties en poids d'un ou de plusieurs polyéther-alcools à fonctionnalité élevée, possédant des fonctionnalités de 6 à 8 et des masses moyennes d'un équivalent de 125 à 200,
b2) de 5 à 30 parties en poids d'un ou de plusieurs polyéther-alcools à base d'amines aliphatiques, possédant des fonctionnalités de 3 à 4 et des masses moyennes d'un équivalent de 70 à 130,
b3) de 3 à 25 parties en poids d'un ou de plusieurs polyéther-alcools à faible fonctionnalité, possédant des fonctionnalités de 2 à 3 et des masses moyennes d'un équivalent de 67 à 250, et
b4) de 8 à 20 parties en poids d'un ester de glycérine et d'acides gras contenant des groupes OH.

2. Procédé selon la revendication 1, **caractérisé en ce qu'**on met en oeuvre, à titre de composés à poids moléculaires élevés contenant au moins deux atomes d'hydrogène réactifs, un mélange possédant un indice d'hydroxyle moyen de 350 à 390 mg (KOH/g).

3. Procédé selon la revendication 1 ou 2, **caractérisé en ce qu'**on met en oeuvre, à titre d'ester de glycérine et d'acides gras contenant des groupes OH, de l'huile de ricin.

4. Procédé selon les revendications 1 à 3, **caractérisé en ce qu'**on effectue la mise en réaction à un indice d'isocyanate de 115 à 130.

5. Procédé selon l'une quelconque des revendications 1 à 4, **caractérisé en ce qu'**on met en oeuvre, à titre d'agent moussant, des hydrocarbures aliphatiques.

6. Procédé selon la revendication 5, **caractérisé en ce qu'**on met en oeuvre, à titre d'agent moussant, du n-pentane et/ou de l'isopentane.

7. Procédé selon la revendication 5 ou 6, **caractérisé en ce qu'**on met en oeuvre, à titre d'agent moussant, du n-pentane.
